## Europäisches Patentamt

## European Patent Office

## Office européen des brevets

(19)

(11) Veröffentlichungsnummer: **0 101 835**
**B1**

(12)

# EUROPÄISCHE PATENTSCHRIFT

(45) Veröffentlichungstag der Patentschrift:
07.01.87

(51) Int. Cl.⁴: **F 16 M 13/00**

(21) Anmeldenummer: **83106500.8**

(22) Anmeldetag: **04.07.83**

(54) **Bausatz zur Erzeugung eines Säulenstativs.**

(30) Priorität: **28.08.82 DE 3232131**

(43) Veröffentlichungstag der Anmeldung:
**07.03.84 Patentblatt 84/10**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**DE - A - 2 152 865**
**GB - A - 2 045 068**
**US - A - 3 214 119**

(73) Patentinhaber: **INKA Instrumentenfabriek Kampen B.V.,
Handelsstraat 18, NL-8263 BE Kampen (NL)**

(72) Erfinder: **Hassink, Bert, Beyerinckstraat 43, NL-8265 XA
Kampen (NL)**

(74) Vertreter: **Habbel, Hans-Georg, Dipl.-Ing.,
Postfach 3429 Am Kanonengraben 11, D-4400 Münster
(DE)**

## Beschreibung

Die Erfindung bezieht sich auf einen Bausatz zur Erstellung eines Säulenstativs gemäss dem Oberbegriff des Hauptanspruches.

Aus der Zeitschrift CAMERA, Februar 1961, Seiten 54 und 55 sind Säulenstative bekanntgeworden, die eine an der Säule verschiebbare Muffe aufweisen, wobei an diese Muffe Trägereinheiten zur Aufnahme von Lampen, fotografischen Einrichtungen od. dgl. angeschlossen werden können. Der Aufbau solcher Säulenstative aus einzelnen Bausatzelementen, die in unterschiedlicher Weise miteinander kombiniert, eine grosse Variationsmöglichkeit ergeben, ist aus dieser Vorveröffentlichung nicht ersichtlich.

Ein Bausatz zur Erstellung eines Säulenstativs ist aus der US-PS 32 14 119 bekannt. Bei dieser bekannten Einrichtung besteht die Säule aus einem massiven viereckigen Bauteil, das einseitig an seinen Seitenkanten mit Führungsnuten ausgerüstet ist, in die entsprechende Bauträger eingesetzt werden können, die den unterschiedlichen Anforderungen, die an Stativeinheiten zu stellen sind, Rechnung tragen.

Die anzuschliessenden Profilelemente sind aber nicht auseinander aufbaubar und die Anordnung der verschiebbaren Bauteile an der Säule ist derart, dass die ausreichende Festigkeit bei schweren Geräten, wie beispielsweise Lampen od. dgl., nicht gewährleistet ist. Auch der Anschluss weit auskragender Arme ist nicht möglich, was wiederum bei vielen fotografischen Aufnahmen notwendig ist.

Der Erfindung liegt die Aufgabe zugrunde, einen Bausatz zu schaffen, der zur Erstellung eines Säulenstativs geeignet ist und der mit möglichst wenig Bauelementen eine grosse Variationsmöglichkeit der anzuschliessenden Trägereinheiten ermöglicht.

Diese der Erfindung zugrundeliegende Aufgabe wird durch die Lehre des kennzeichnenden Teiles des Hauptanspruches gelöst.

Durch diese Grundelemente können unterschiedliche Trägereinheiten aufgebaut werden, z.B. als erstes die die Säule allseitig umgebende Muffe, die an der Stativsäule gleitbar auf- und abbeweglich ist und an der nunmehr wiederum durch entsprechende Gestaltung der Matrizenprofilleisten und der Patrizenprofilleisten Trägereinheiten angeschlossen werden können, die beispielsweise zur Aufnahme von Lampen, fotografischen Einrichtungen usw. dienen.

Vorteilhafte Ausgestaltungen sind in den Unteransprüchen definiert.

Ausführungsbeispiele der Erfindung werden nachfolgend anhand der Zeichnungen erläutert. Die Zeichnungen zeigen dabei:

Fig. 1 schaubildlich ein Säulenstativ,

Fig. 2 in einer auseinandergezogenen Darstellungsweise einen Stativfuss, eine Säule und die die Säule umgebende Muffe mt vorgeschalteter Trägereinheit,

Fig. 3 in grösserem Massstab einen Schnitt durch die die nicht dargestellte Säule umgebende Muffe,

Fig. 4 die Matrizenprofilleiste und die Patrizenprofilleiste in einer unmittelbar aneinander angeschlossenen Stellung und

Fig. 5 ein zusätzliches Befestigungsteil und eine weitere Verwendungsmöglichkeit der Patrizenprofilleiste.

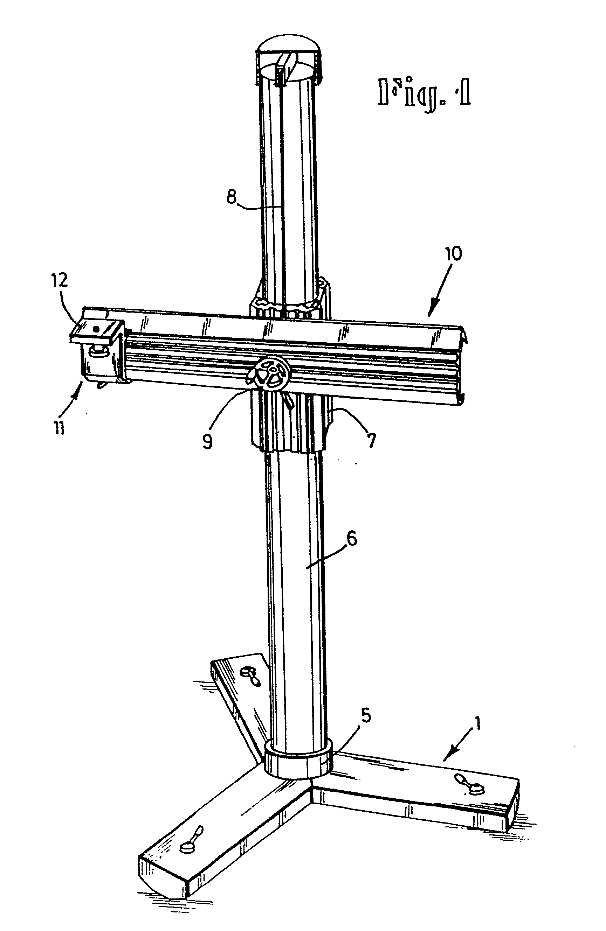

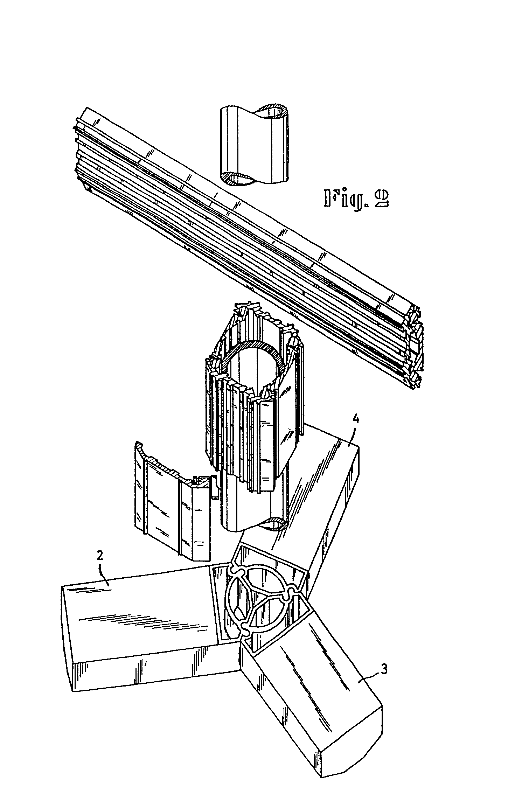

In den Zeichnungen ist mit 1 ein Stativfuss bezeichnet, der, wie dies deutlich in Fig. 2 erkennbar ist, aus einzelnen Fussteilen 2, 3 und 4 besteht, die über ineinandergreifende Führungsteile im Zentrum miteinander verbindbar sind. Auf diese Weise ist der Fuss leicht auseinanderzunehmen und verschickbar oder lagerbar, wobei bei ineinandergesetztem Fuss die erforderliche Standfestigkeit ohne Schwierigkeiten erreicht wird.

An den Stativfuss schliesst sich eine Standmuffe 5 an, die eine Säule 6 trägt, die als Hohlprofil ausgebildet sein kann, wie dies Fig. 2 deutlich zeigt. Die Säule 6 wird von einer Muffe 7 umgeben, die an der Säule 6 auf- und abbeweglich gelagert ist, beispielsweise über eine Zugvorrichtung 8, die mit einem Gegengewicht innerhalb der Säule 6 zusammenwirken kann. Die Verstellung kann über ein Handrad 9 erfolgen. An der Muffe 7 kann eine Trägereinheit 10 angeschlossen werden, die selbst wiederum ein Tragprofil 11 trägt, das bei dem in Fig. 1 dargestellten Ausführungsbeispiel als Winkelprofil mit einer Tragplatte 12 versehen ist, auf die entsprechende Gerätschaften aufgesetzt und festgelegt werden können.

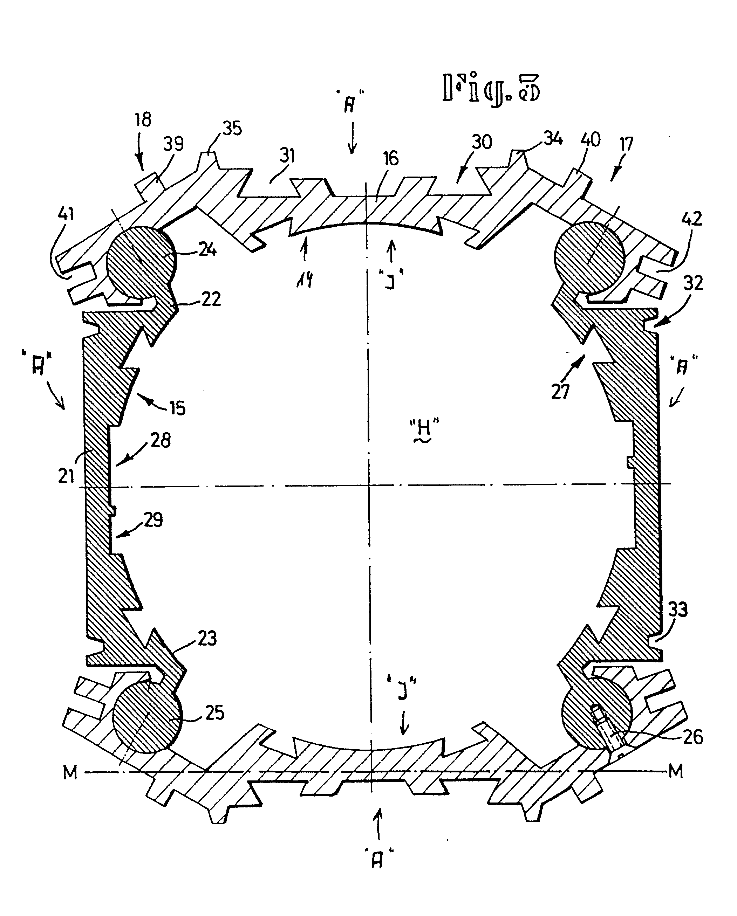

Der eigentliche Bausatz setzt sich im wesentlichen aus deutlicher in Fig. 3 erkennbaren Matrizenprofilleisten 14 mit einem Matrizenprofil und Patrizenprofilleisten 15 mit einem Patrizenprofil zusammen, wobei bei dem in Fig. 3 dargestellten Ausführungsbeispiel zwei Matrizenprofilleisten 14 und zwei Patrizenprofilleisten 15 so ineinandergeschachtelt sind, dass dadurch ein offener Raum H definiert wird, der zur Aufnahme der Säule 6 dient.

In Fig. 3 sind weiterhin mit A die Aussenseiten der Matrizenprofilleisten und der Patrizenprofilleisten 15 bezeichnet, während die Innenseiten mit I bezeichnet sind.

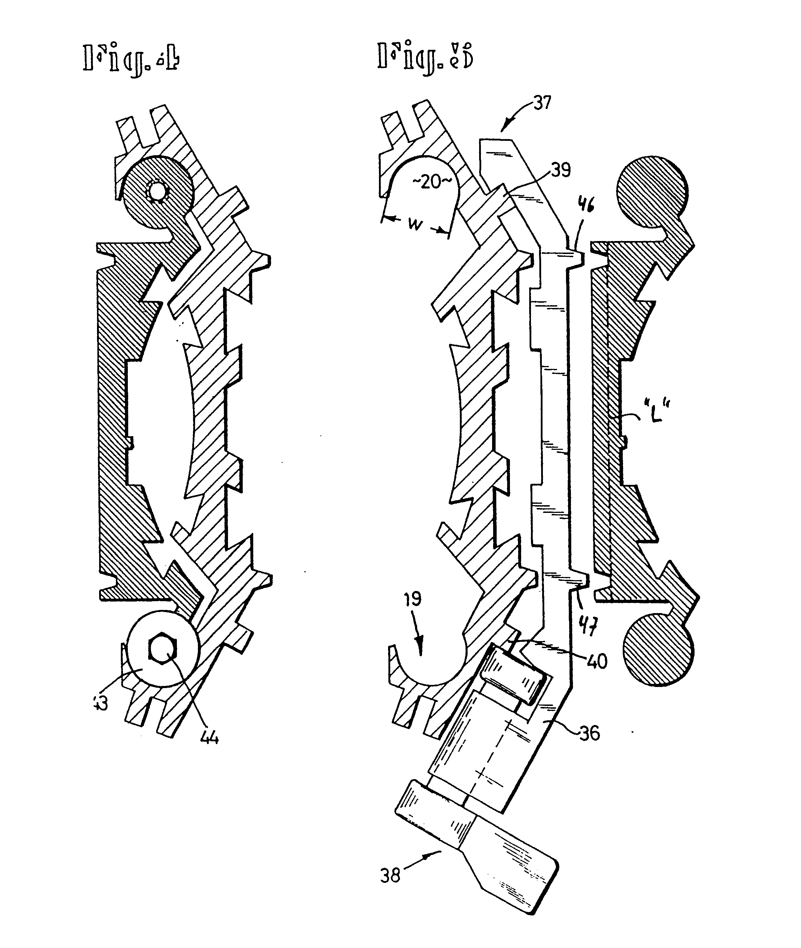

Jede Matrizenprofilleiste 14 besteht aus einem Mittelteil 16 und zwei sich daran anschliessenden Flügeln 17 und 18, die gegenüber einer Mittelebene «M–M» zur Innenseite I abgewinkelt sind. Im Endbereich dieser Seitenkanten sind Matrizenöffnungen 19 und 20 vorgesehen (Fig. 5), die zur Innenseite I hin offen sind.

Jede Patrizenprofilleiste 15 weist auf Stützschenkeln 22 und 23 Patrizenvorsprünge 24 und 25 auf, die in die Matrizenöffnungen 19 der Matrizenprofilleisten 14 passen.

Die Matrizenöffnungen 20 und 19 sind so gestaltet, dass ein einfaches Einsetzen der Patrizenvorsprünge 24 und 25 möglich ist, wobei bei der in Fig. 3 dargestellten Muffe 7 die Festlegung der Bausatzteile über Befestigungsmittel, z.B. Schrauben 26, erfolgen kann, von denen lediglich eines dieser Befestigungsmittel in der Zeichnung angedeutet ist.

Auf der Innenseite I der Matrizenprofilleiste 14 und der Patrizenprofilleiste 15 sind schwalbenschwanzförmige Gleitnuten 27 ausgenommen, die Kunststofführungen aufnehmen können, die mit ihrer Aussenseite an der Aussenwandung der Stütze 6 zur Anlage kommen.

Weiterhin sind auf der Innenseite I der Patrizenprofilleiste 15 Nuten 28 und 29 ausgearbeitet, die der Aufnahme von Getriebebauteilen dienen können, beispielsweise einer Zahnstange und einer als Bremse einsetzbaren Vorrichtung, so dass bei der Anordnung gemäss Fig. 4 die Patrizenprofilleiste 15 gegenüber der Matrizenprofilleiste 14 verschoben werden kann.

Auf der Aussenseite A der Matrizenprofilleiste 14 sind zwei Schwalbenschwanznuten 30 und 31 eingearbeitet, die mit entsprechenden Schwalbenschwanzköpfen zusammenarbeiten können und durch die nunmehr eine Befestigungsmöglichkeit für anzuschliessende Bauteile geschaffen wird, wobei aufgrund der Nutführung diese Bauteile in Längsachse der Matrizenprofilleiste 14 verschiebbar sind.

Auf der Aussenseite A der Patrizenprofilleiste 15 sind Nuten 32 und 33 ausgearbeitet, die mit Leisten 34 und 35 zusammenarbeiten können, die auf der Aussenseite A der Matrizenprofilleiste 14 vorgesehen sind, so dass ein dichtes und festes Anschliessen gewährleistet wird. Um eine um 90° gedrehte Anschlussmöglichkeit für die Patrizenprofilleiste 15 zu schaffen, ist – wie dies in Fig. 5 durch die gestrichelte Linie «L» angedeutet ist – die Möglichkeit gegeben, ein quer zu dem Nutpaar 32, 33 verlaufendes Nutpaar einzufräsen, das nunmehr mit den Leisten 34 und 35 der Matrizenprofilleiste 14 in Verbindung kommen kann.

In Fig. 5 ist mit 36 ein Befestigungsteil bezeichnet, das einenendes widerhakenartig bei 37 ausgebildet ist und anderenendes eine schraubbare Klemmvorrichtung 38 aufweist. Dieses Tragprofil kann mit den auf der Oberseite der Seitenteile 17 und 18 vorgesehenen Vorsprüngen 39 und 40 in Verbindung gebracht werden und ermöglicht so den Anschluss dieses Bauteiles, an das nunmehr weitere Bauteile anschliessbar sind. Auf der Aussenseite A des Befestigungsteiles 36 sind Leisten 46 und 47 vorgesehen, die mit den Nuten 32 und 33 der Patrizenleiste 15 zusammenwirken können.

An den Stirnflächen der Seitenkanten 17 und 18 sind Nuten 41 und 42 angeordnet, die als Montagehilfe für anzuschliessende Zusatzgeräte dienen.

Wie aus Fig. 4 zu ersehen, ist es möglich, auf die freien Stirnenden der Patrizenvorsprünge 23 und 24 Kunststofführungen 43 aufzusetzen, die beispielsweise mittels einer Schraube 44 festgelegt werden und der reibungsfreien Führung der Patrizenprofilleiste 15 in der Matrizenprofilleiste 14 dienen.

Die Öffnungsweite W der Matrizenöffnungen 19 und 20 (Fig. 5) ist grösser als der maximale Durchmesser der Patrizenvorsprünge 24 und 25, so dass ein problemloses Einsetzen der Patrizenvorsprünge 24 und 25 in die Matrizenöffnungen 19 und 20 möglich ist.

Die Patrizenprofilleiste 15, die Matrizenprofilleiste 14 und das Befestigungs-Teil sind als Aluminiumprofile gezogen.

## Patentansprüche

1. Bausatz zur Erstellung einer auf der Säule (6) eines Säulenstativs verschiebbaren Muffe (7) und einer daran befestigten Trägereinheit (10) zur Aufnahme von Lampen, fotografischen Einrichtungen od. dgl., dadurch gekennzeichnet, dass er eine Mehrzahl gleichartiger Matrizenprofilleisten (14) mit einem Matrizenprofil und einer Mehrzahl gleichartiger Patrizenprofilleisten (15) mit einem Patrizenprofil umfasst, wobei die Matrizenprofilleiste (14) in ihren Endbereichen Matrizenöffnungen (19, 20) und die Patrizenprofilleiste (15) in ihren Endbereichen Patrizenvorsprünge (24, 25) aufweist und die Patrizenvorsprünge (24, 25) in die Matrizenöffnungen (19, 20) einsetzbar sind und wobei die Formgebung der Profile so gewählt ist, dass durch Einsetzen der jeweiligen Patrizenvorsprünge in die Matrizenöffnungen sowohl zwei Profilleisten zu einer Trägereinheit (10) als auch vier Profilleisten zu einer Muffe (7) verbindbar sind.

2. Vorrichtung nach Anspruch 1, dadurch gekennzeichnet, dass die Matrizenprofilleiste (14) an ihrer Aussenseite (A) vorstehende kegelstumpfförmige Leisten (34, 35) aufweist und die Patrizenprofilleiste (15) an ihrer Aussenseite (A) der Form der Leisten angepasste Nuten (32, 33) besitzt.

3. Vorrichtung nach Anspruch 1 und 2, dadurch gekennzeichnet, dass die Matrizenprofilleiste (14) an ihrer die Matrizenöffnungen (19, 20) aufweisenden Seitenkanten (17, 18) gegenüber einer durch die Matrizenprofilleiste (14) verlaufenden Mittelebene (M) zur Innenseite (I) abgewinkelt ist und die Matrizenöffnungen (19, 20) auf den Innenseiten dieser abgewinkelten Flügel (17, 18) angeordnet sind.

4. Vorrichtung nach einem oder mehreren der vorhergehenden Ansprüche, dadurch gekennzeichnet, dass die Patrizenprofilleiste (15) an ihrer Aussenseite (A) im wesentlichen eben ausgebildet ist und die Patrizenvorsprünge (24, 25) an den Seitenkanten der Patrizenprofilleiste (15) auf Stützschenkeln (22, 23) angeordnet sind.

5. Vorrichtung nach einem oder mehreren der vorhergehenden Ansprüche, dadurch gekennzeichnet, dass die Innenseite (I) der Matrizenprofilleiste (14) und die Innenseite (I) der Patrizenprofilleiste (15) in Anpassung an die Säule (6) geformt sind.

6. Vorrichtung nach einem oder mehreren der vorhergehenden Ansprüche, gekennzeichnet durch ein Befestigungsteil (36) mit einer Klemmvorrichtung (38), das an die Aussenseite der Matrizenprofilleiste (14) an dort vorgesehenen Klemmleisten (39, 40) anschliessbar und festklemmbar ist (Fig. 5).

7. Vorrichtung nach einem oder mehreren der vorhergehenden Ansprüche, dadurch gekennzeichnet, dass das Befestigungsteil (36) an seiner Aussenseite (A) mit den Nuten (32, 33) der Patrizenprofilleiste (15) entsprechenden Leisten (46, 47) ausgerüstet ist.

8. Vorrichtung nach Anspruch 1 und 6, dadurch gekennzeichnet, dass die Patrizenprofilleiste (15), die Matrizenprofilleiste (14) und das Befestigungsteil (36) als Aluminiumprofile gezogen sind.

9. Vorrichtung wenigstens nach Anspruch 1, dadurch gekennzeichnet, dass auf der Aussenseite (A) der Matrizenprofilleiste (14) Schwalbenschwanznuten (30, 31) zur Anbringung von Befestigungsbauteilen vorgesehen sind.

10. Vorrichtung wenigstens nach Anspruch 1, dadurch gekennzeichnet, dass auf der Innenseite (I) der Patrizenprofilleiste (15) und der Matrizenprofilleiste (14) schwalbenschwanzförmige Gleitnuten (27) vorgesehen sind.

11. Vorrichtung wenigstens nach Anspruch 1, dadurch gekennzeichnet, dass in den Stirnkanten der Flügel (17, 18) Nuten (41, 42) vorgesehen sind, die als Montagehilfe dienen.

12. Vorrichtung wenigstens nach Anspruch 1, dadurch gekennzeichnet, dass auf der Innenseite (I) der Patrizenprofilleiste (15) zusätzlich zu den schwalbenschwanzförmigen Gleitnuten (27) Nuten (28, 29) ausgebildet sind, die der Aufnahme von Getriebebauteilen dienen (Fig. 3).

13. Vorrichtung wenigstens nach Anspruch 1, gekennzeichnet durch auf die freien Stirnenden der Patrizenvorsprünge (24, 25) der Patrizenprofilleiste (15) aufsetzbare Kunststofführungen (43) (Fig. 4).

14. Vorrichtung wenigstens nach Anspruch 1, gekennzeichnet durch die Patrizenprofilleisten (15) mit der Matrizenprofilleiste (14) verbindende Befestigungsmittel (26), z.B. Schrauben (Fig. 3).

15. Vorrichtung wenigstens nach Anspruch 1, 3 und 6, dadurch gekennzeichnet, dass das Befestigungsteil (36) in Anpassung an die Abwinklung der Flügel (17, 18) abgewinkelt ausgebildet ist.

## Claims

1. Kit for the construction of a sleeve (7) displaceable on the column (6) of a column stand, and of a support unit (10) for the mounting of lamps, photographic devices or the like, said unit being fixed to the said sleeve, characterised in that it comprises a plurality of similar female profile strips (14) having a female profile and also a plurality of similar male profile strips (15) having a male profile, the female profile strip (14) comprising in its end regions female openings (19, 20) and the male profile strip (15) having in its end regions male projections (24, 25), the male projections (24, 25) being insertable in the female openings (19, 20), and the configuration of the profiles being so chosen that by inserting the respective male projections into the female openings two profile strips can be connected to form a support unit (10) and also four profile strips can be connected to form a sleeve (7).

2. Device according to claim 1, characterised in that the female profile strip (14) at its outer side (A) comprises projecting frustoconical strips (34, 35), and the male profile strip (15) at its outer side (A) comprises grooves (32, 33) adapted to the form of the strips.

3. Device according to claims 1 and 2, characterised in that the female profile strip (14) at its side edges (17, 18) provided with the female openings (19, 20) is angled-over towards the inner side (I) relatively to a central plane (M) extending through the female profile strip (14), and the female openings (19, 20) are arranged on the inner sides of these angled-over wings (17, 18).

4. Device according to one or more of the preceding claims, characterised in that the male profile strip (15) at its outer side (A) is of substantially level form, and the male projections (24, 25) are arranged at the side edges of the male profile strip (15) on supporting arms (22, 23).

5. Device according to one or more of the preceding claims, characterised in that the inner side (I) of the female profile strip (14) and the inner side (I) of the male profile strip (15) are shaped in adaptation to the column (6).

6. Device according to one or more of the preceding claims, characterised by a fixing part (36) having a clamping device (38) and adapted to be placed against and clamped securely to the outer side of the female profile strip (14) on clamping strips (39, 40) which are provided thereon (Fig. 5).

7. Device according to one or more of the preceding claims, characterised in that the fixing part (36) is provided at its outer side (A) with strips (46, 47) corresponding to the grooves (32, 33) of the male profile strip (15).

8. Device according to claims 1 and 6, characterised in that the male profile strip (15), the female profile strip (14) and the fixing part (36) are formed as aluminium section elements.

9. Device at least according to claim 1, characterised in that at the outer side (A) of the female profile strip (14) dovetail grooves (30, 31) are provided for the arranging of fixing components.

10. Device at least according to claim 1, characterised in that dovetail sliding grooves (27) are provided at the inner side (I) of the male profile strip (15) and of the female profile strip (14).

11. Device at least according to claim 1, characterised in that grooves (41, 42) serving as assembling aids are provided in the end faces of the wings (17, 18).

12. Device at least according to claim 1, characterised in that grooves (28, 29) are constructed on the inner side (I) of the male profile strip (15) additionally to the dovetail sliding grooves (27) and serve for accommodating drive components (Fig. 3).

13. Device at least according to claim 1, characterised by synthetic plastic material guides (43) adapted to be placed on the free end faces of the male projections (24, 25) of the male profile strips (15) (Fig. 4).

14. Device at least according to claim 1, characterised by fixing means (26), e.g. screws, connecting the male profile strips (15) to the female profile strips (14) (Fig. 3).

15. Device at least according to claims 1, 3 and 6, characterised in that the fixing part (36) is angledover in adaptation to the angling-over of the wings (17, 18).

**Revendications**

1. Jeu d'éléments pour la fabrication d'un manchon (7) pouvant coulisser sur la colonne (6) d'un support à colonne, et d'une unité console (10) fixée à ce manchon pour recevoir des lampes, dispositifs photographiques ou équivalents, caractérisé en ce qu'il comprend plusieurs profilés femelles (14) analogues qui comprennent un profil femelle, et plusieurs profilés mâles (15) analogues présentant un profil mâle, le profilé femelle (14) présentant des cavités femelles (19, 20) dans ses régions d'extrémités et le profilé mâle (15) présentant des saillies mâles (24, 25) pouvant être emboîtées dans les cavités femelles (19, 20), la conformation des profilés étant choisie de manière que, par emboîtement des saillies mâles dans les cavités femelles, on puisse aussi bien assembler deux profilés pour former une unité console (10) que quatre profilés pour former un manchon (7).

2. Dispositif selon la revendication 1, caractérisé en ce que le profilé femelle (14) présente sur sa face extérieure (A), des nervures (34, 35) en saillie de forme tronconique et en ce que le profilé mâle (15) possède sur sa face extérieure (A) des rainures (32, 33) adaptées à la forme des nervures.

3. Dispositif selon les revendications 1 et 2, caractérisé en ce que le profilé femmelle (14) est coudé vers la face intérieure (I) le long de ses ailes latérales (17, 18) qui présentent les cavités femells (19, 20), par rapport à un plan médian (M-M) qui traverse le profilé femelle (14), et en ce que les cavités femelles (19, 20) sont disposées sur les faces intérieures de ces ailes coudées (17, 18).

4. Dispositif selon une ou plusieurs des revendications précédentes, caractérisé en ce que le profilé mâle (15) est de forme sensiblement plane sur sa face extérieure (A) et que les saillies mâles (24, 25) sont disposées sur les bords latéraux du profilé mâle (15), sur des branches d'appui (22, 23).

5. Dispositif selon une ou plusieurs des revendications précédentes, caractérisé en ce que la face intérieure (I) du profilé femelle (14) et la face intérieure (I) du profilé mâle (15) sont conformées pour s'adapter à la colonne (6).

6. Dispositif selon une ou plusieurs des revendications précédentes, caractérisé par une pièce de fixation (36) munie d'un dispositif de serrage (38), qui peut être assemblée et bloquée par serrage (figure 5) à la face extérieure du profilé femelle (14) en se montant sur des nervures de serrage (39, 40) prévues sur ce profilé.

7. Dispositif selon une ou plusieurs des revendications précédentes, caractérisé en ce que la pièce de fixation (36) est équipée, sur sa face extérieure (A), de nervures (46, 47) qui correspondent aux rainures (32, 33) du profilé mâle (15).

8. Dispositif selon les revendications 1 et 6, caractérisé en ce que le profilé mâle (15), le profilé femelle (14) et la pièce de fixation (36) sont constitués par des profilés en aluminium filé.

9. Dispositif selon au moins la revendication 1, caractérisé en ce que, sur la face extérieure (A) du profilé femelle (14) sont prévues des rainures à queue d'aronde (30, 31) pour le montage d'éléments de fixation.

10. Dispositif selon au moins la revendication 1, caractérisé en ce que, sur la face intérieure (I) du profilé mâle (15) et du profilé femelle (14) sont prévues des rainures formant glissières à profil de queue d'aronde.

11. Dispositif selon au moins la revendication 1, caractérisé en ce que, dans les chants frontaux des ailes (17, 18), sont prévues des rainures (41, 42) qui servent d'auxiliaires de montage.

12. Dispositif selon au moins la revendication 1, caractérisé en ce que, sur la face intérieure (I) du profilé mâle (15) sont formées, en supplément des rainures formant glissières (27) à profil de queue d'aronde, des rainures (28, 29) qui servent à recevoir des éléments de mécanismes (figure 3).

13. Dispositif selon au moins la revendication 1, caractérisé par des patins en matière plastique (43) (figure 4) qui peuvent être montés sur les extrémités radiales libres des saillies mâles (24, 25).

14. Dispositif selon au moins la revendication 1, caractérisé par des moyens de fixation (26), par exemple des vis, qui relient les profilés mâles (15) aux profilés femelles (14) (figure 3).

15. Dispositif selon au moins les revendications 1, 3 et 6, caractérisé en ce que l'élément de fixation (36) est coudé pour s'adapter à la forme coudée des ailes (17, 18).

Fig. 1

Fig. 2

Fig. 5

0 101 835

Fig. 4

Fig. 5

13